# EUROPEAN PATENT SPECIFICATION

(11) **EP 2 934 736 B1**
(45) Date of publication and mention of the grant of the patent: **22.07.2020**
(21) Application number: 13818488.2
(22) Date of filing: 17.12.2013
(51) Int. Cl.: B01J 8/18, B01J 8/22, B01J 49/10, B01J 20/34

(54) **REACTOR VESSEL FOR SUSPENDING MEDIA PARTICLES IN A FLUID**
REAKTORKESSEL FÜR DIE SUSPENSION VON MEDIENPARTIKELN IN EINEM FLUID
CUVE DE RÉACTEUR POUR METTRE EN SUSPENSION DES PARTICULES DANS UN FLUIDE

(30) Priority: 18.12.2012 NL 2010005
(43) Date of publication of application: 28.10.2015
(73) Proprietor: N.V. PWN Waterleidingbedrijf Noord-Holland, 1991 AS Velserbroek (NL)
(72) Inventor: KAMP, Petrus Cornelis, 1934 PW Egmond aan de Hoef (NL)
(74) Representative: Nederlandsch Octrooibureau
(86) International application number: PCT/NL2013/050906
(87) International publication number: WO 2014/098578

(56) References cited:
- EP-A2- 1 186 653
- WO-A1-2013/002948
- WO-A1-2013/079075
- FR-A1- 2 522 529
- FR-A1- 2 794 129
- US-A- 2 580 827
- US-A- 3 084 120
- US-A1- 2009 130 742
- US-A1- 2011 313 062

## Description

### Field of the invention

The invention relates to a reactor vessel for suspending media particles in a fluid according to claim 1, said reactor vessel comprising a center line, a reactor bottom, an air injection device situated near the reactor bottom in a vertical mid plane, the reactor bottom on each side of the vertical mid plane sloping downward to a lower point situated below the air injection device, a draft tube extending along the center line, substantially above the air injection device.

### Background of the invention

From US patent application no. US 2009/0130742 a system for the biological regeneration of ion exchange and absorptive media is known comprising a reactor vessel having a frusto-conical shaped bottom. A feed device, which may comprise a gas airlift device, is situated at the center of the bottom for recirculation of the biological regenerating fluid into the draft tube. The purpose of the frusto-conical shaped bottom is to funnel the media particles toward the bottom center of the vessel below the draft tube inlet so that the media is recirculated back up through the draft tube. This configuration helps to prevent "dead areas" of low flow where the contaminated media can be trapped and not adequately exposed to the biological regenerating fluid. In an alternative arrangement of the known regenerating system, the reactor bottom can be dish-shaped or rounded.

The known system has as a disadvantage that the gas inlet device is situated at the lowest point of the frusto-conical part, which needs to have a relatively steep inclination (45-60 degrees) for the particulate matter moving to the lowest point by gravity before being brought back into recirculation. Upscaling of the known device to larger size will result in a very large reactor as it, due to its conical shape, requires a significant height for proper operation.

It is known in ion exchange reactors to create an interfacial exchange between the regenerating fluid and the ion exchange particles by creating turbulence using a diffuser plates or an air injector grid, at the reactor bottom injecting air in an upward direction. Especially when treating raw water in a fluidized bed reactor in which the absorptive or ion exchange particles are suspended, adequate suspension should be achieved to prevent vertical stratification, next to a homogeneous and maximised reaction at the liquid-particle interface.

US 2011/0313062 discloses a slurry bubble column with a gas distribution arrangement to maintain circulation and flushing of the catalyst from the vessel wall. WO 2013/079075 A1 discloses a biological treatment container wherein circulating flows are created at the bottom and on the walls of the container.

It therefore is an object of the present invention to provide a reactor vessel for suspending media particles in a fluid in which an effective and homogeneous suspension of particles can be achieved. It is also an object of the invention to provide a reactor vessel in which an improved reaction rate at the liquid-particle interface is obtained.

It is again an object of the invention to obtain a reactor which is provided with a an airlift device and which has relatively large zones extending sideways of the airlift device for reactions at the liquid-particle interface at a relatively compact size of the reactor.

### Summary of the invention

The invention relates to a reactor vessel for suspending media particles in a fluid, the reactor vessel having a center line and comprising:
a reactor bottom,
a number of air injection devices each comprising a nozzle having a nozzle axis extending transversely to the center line wherein adjacent reactor bottom areas of the reactor bottom extend in parallel fashion along the direction of the nozzle axis, each air injection device situated near the reactor bottom in a vertical mid plane having a first side and an opposite a second side, the reactor bottom on each side of the vertical mid plane sloping downward to a lower point situated below the air injection device;
a draft tube extending along the center line, substantially above the air injection devices, and the number of air injection devices extend in a direction transversely to the center line at a horizontal distance from the draft tube,
characterised in that
each air injection device is spaced at a predetermined distance from the lower point of the reactor bottom, and in that for each air injection device a fluid passage is defined between a lower surface of the injection device and the bottom, one or more air exit openings of the injection device being provided in the nozzle and situated at the second side of the mid plane for providing an upward air stream, wherein on the second side a larger open surface of air exit openings is present than on the first side, such that particles can travel downward at the first side of the mid plane and can move through the fluid passage to the second side of the mid plane to be transported upward by the air stream.

Hereto a reactor vessel according to the present invention is characterised in that the air injection device is spaced at a predetermined distance from the bottom, a fluid passage being defined between a lower surface of the injection device and the bottom, an air exit opening of the injection device being situated at a second side of the mid plane for providing an upward air stream, such that particles can travel downward at a first side of the mid plane and can move through the fluid passage to the second side of the mid plane to be transported upward by the air stream.

By spacing the air injection device above the bottom of the reactor vessel, a fluid flow channel is defined below the injection device, via which channel suspended particles that travel downward along the outside of the draft tube towards the reactor bottom, are transported along the reactor bottom, back up into the draft tube to be again suspended. The spacing of the air injection device above the reactor bottom prevents "dead areas" from being formed and avoids trapping of the particles on the reactor bottom near the air injection device. This allows the reactor bottom to be executed in a relatively flat manner while extending sideways beyond the draft tube over relatively large distances, while achieving very good resuspension of the particles. The reactor of the present invention can be upscaled to larger dimensions, without the height of the reactor becoming unduly large.

By choosing the appropriate air bubble density per square meter of reactor vessel cross-section, the exchange reaction at the particle-surface interface can be adjusted in the regions situated sideways from the central air lift device, whereas airflow and the resulting induced circulation current more or less independently influence the suspension of the media particles.

The number of air injection devices extend in a direction transversely to the center line at a horizontal distance from the draft tube.

In an embodiment, the air injection device comprises a tubular air inlet, having an axis extending transversely to the center line.

On one side of the nozzle a larger open surface of an air exit openings than on the other side of the nozzle is present. The nozzle may for instance on one side be closed and may comprise at the opposite side, at a distance there from, air exit openings. By this asymmetric arrangement of the air flow, fluid and particles are sucked into the side of the fluid passage that is situated upstream of the nozzle and are transported through the channel that is formed between the nozzle and the reactor bottom, in a direction transversely to the center line, to the side of air injection, to be transported upward.

In another embodiment the reactor vessel is provided with a separator wall that extends upwards from the nozzle along the centerline. This separator wall provides an effective way of preventing unwanted backflow over the top surface of the nozzle.

Preferably, the reactor bottom is of a curved shape having a rounded lower part. The flow channel between the bottom side of the tubular air injection device and the bottom has a volute like shape resulting in an efficient pumping effect as fluid and particles are sucked in and are accelerated to be pumped upward back into the draft tube for effective suspension.

In an embodiment the rounded lower part extends substantially along the nozzle axis, the rounded lower part being connected to side walls extending substantially along the nozzle axis, one side wall having an angle α with respect to a horizontal plane at that nozzle axis position, the angle α being smaller than an angle β of the opposite side wall at that nozzle axis position. Such an asymmetric shape provides a continuous, strong flow over the reactor bottom during use, preventing the formation of deposits there. In this respect, α is preferably approximately 0 - 60° and more preferably is around 45°.

The particles in the reactor vessel according to the invention may for instance comprise absorptive particles, zeolites, or ion exchange resin particles and may be of a size of between 0.1 and 1.5 micron, the air injection device being adapted to generate air bubbles having a diameter of between 0.2 and 3.0 micron at a flow of between 500 and 1500 L/hour.

The reactor vessel according to the invention may have a diameter D2 of between 0.5 and 10 m, a diameter of the draft tube being between 0.2 and 0.5 D2, a distance of the air injection device from a lower end of the draft tube being between 2.5 and 5 cm, and a distance of the air injection device from the reactor bottom being between 2-3 times the diameter D3 of the nozzle.

A further embodiment relates to an abovementioned reactor vessel, wherein the reactor bottom comprises a plurality of adjacent reactor bottom areas being of curved shape and having a rounded lower part, wherein each of the reactor bottom areas is provided with an air injection device spaced at a predetermined distance (H1) from the bottom of that reactor bottom area. When the reactor vessel bottom comprises a plurality of reactor vessel bottom areas each having their 'own' air injection device, deposit formation can be prevented over a relatively large surface of the reactor vessel bottom. Preferably, substantially the whole reactor vessel bottom surface is constituted of such reactor bottom areas, each of these areas being provided with their own air injection device.

A further embodiment relates to a reactor vessel, wherein each air injection device comprises a tubular nozzle, having a nozzle axis extending transversely to the center line, wherein the adjacent reactor bottom areas extend in a parallel fashion along the direction of the nozzle axis. This enables relatively easy construction of a reactor vessel bottom with multiple air injection devices and reactor bottom areas.

### Brief description of the drawings

An embodiment of a reactor vessel according to the present invention will by way of non-limiting example be explained in detail with reference to the accompanying drawings. In the drawings:
Fig. 1 shows a schematic overview of a reactor vessel according to the present invention,
Fig. 2 shows a close-up view of two adjacent reactor bottom areas,
Fig. 3 shows a schematic indication of currents introduced in the vessel by air injection,
Fig. 4 shows a schematic cross-sectional view of the reactor vessel of fig. 1, and
Fig. 5 shows a view on an enlarged scale of an air injection system having an asymmetric air flow arrangement.

### Detailed description of the invention

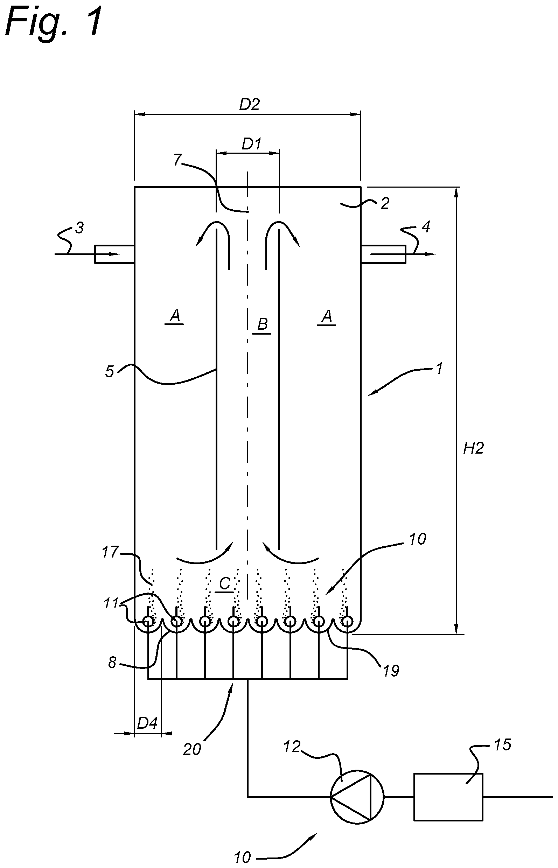

Fig. 1 shows a reactor vessel 1, of generally cylindrical shape having an outer wall 2 with an inlet 3 and an outlet 4. Fluid and media particles, such as raw water and fresh ion exchange resin particles, or regenerating fluid and spent ion exchange particles, are introduced into the vessel via inlet 3. Treated fluid and media particles are removed from the vessel 1 via the outlet 4.

A central draft tube 5 extends vertically along a center line 7 of the vessel 1. In relation to the draft tube 5, the reactor 1 generally comprises three regions of interest: an interface suspension region A outside of the draft tube 5, a uniform suspension region B inside the draft tube 5 and a deposit prevention region C below the draft tube 5.

The height H2 of the of the vessel 1 may range from 2.5 to 8 m. The diameter D2 of the vessel 1 may range from 3 to 10 m. The height of the draft tube 5 is typically between 0.9 and 0.7 times the vessel height H2. The diameter D1 of the draft tube 5 may be between 0.2 and 0.5 times the diameter D2 of the vessel 1, for instance 0.1 - 5 m.

The bottom 8 in the deposit prevention region C is formed by multiple, adjacent reactor bottom areas 19 extending in a parallel fashion in a direction perpendicular to the plane of the drawing. The typical width D4 (see fig. 1) of such a reactor bottom area 19 is 0.2 - 1 m. Each reactor bottom area 19 comprises a nozzle 11 that is connected to an air injection system 10. The nozzle 11 may be cylindrical and extends perpendicular to the plane of the drawing. The length of the nozzle 11 may be 1 - 4 m. The air injection system 10 comprises an air pump 12 situated at the bottom side of the vessel 1 that connects to each nozzle 11 via a network of air distribution channels 20. A cylindrical lower surface of the nozzle 11 is situated at a distance from the rounded bottom of each reactor bottom area 19 such that a fluid passage or channel is formed. The nozzle 11 comprises one or more air openings (13), via which air bubbles can be injected into the reactor 1. A control unit 15 is attached to the air pump 12 for adjusting the flow rate of the air bubbles 17. The nozzles 11 in the reactor bottom areas 19 situated directly below the draft tube 5 are operated at a higher air flow rate than the areas 19 situated outside that area in order to create the desired flow circulation as indicated by the arrows. Preferably, the nozzles 11 are operated in such a way that 10-20% of the generated bubbles enter region B inside the draft tube 5 and 80-90% are injected into region A outside of the draft tube 5.

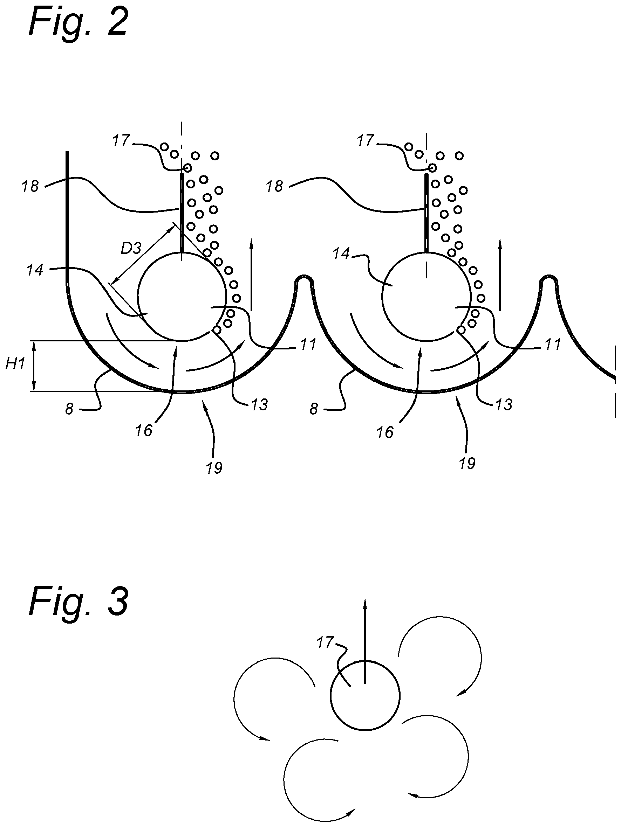

Fig. 2 shows a close-up view of two adjacent reactor bottom areas 19. A cylindrical lower surface 14 of the nozzle 11 is situated at a distance HI from the rounded bottom of each area 19 such that a fluid passage or channel 16 is formed. The nozzle 11 comprises at a lower surface a number of air openings 13, via which air bubbles 17 can be injected into the reactor. The distance HI may range from 2-3 times the diameter D3 of the nozzle 11 and is typically about equal to fore mentioned diameter D3. Diameter D3 may be between 0.2 and 0.5 times the diameter D2 of the vessel 1. The air bubble size is determined by the size and geometry of the air openings 13. To prevent unwanted backflow over the top surface of the nozzle 11 a separator wall, embodied by a fin or plate 18, is arranged above the nozzle 11, extending upwards, parallel to the center line.

The rising air bubbles 17 displace during their upward travel a volume of fluid, such that secondary currents are induced, as schematically shown in fig. 3. These induced secondary currents result in an improved reaction rate of the suspended particles with the surrounding fluid at the fluid-particle interface.

By injecting more air into the draft tube 5 (region B) than in the areas of the vessel 1 surrounding the draft tube (region A), a lower volume density is present inside the draft tube, causing a circulating stream as indicated by the arrows in fig. 1. The suspension of the particles is adjusted by setting the pumping rate of the pump 12 via the control unit 15, which may vary depending on the size and density of the particles.

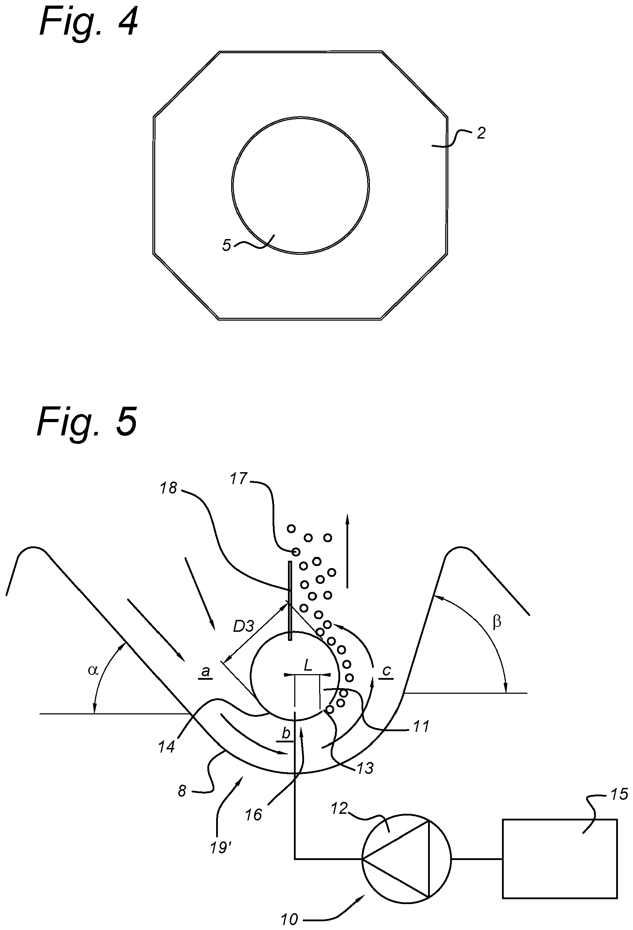

The cross-section of the vessel 1 can be cylindrical, rectangular, or polygonal, as shown by way of example in fig. 4.

In fig. 5 it is shown that the air openings 13 in the top of the nozzle 11 are offset from the center line 7, for instance by a distance L of 0 - 0.25 times D3. In this way, particles travelling downwards are sucked into a channel 16 between the nozzle 11 and the bottom of the reactor bottom area 19', to be moved upwards into the reactor. Again, fig. 5 shows a separator wall in the form of a plate or fin 18 extending upwards from the nozzle 11. The bottom of the reactor bottom area 19' of fig. 5 has an asymmetrical shape, with the left reactor bottom wall being at an angle α with respect to the horizontal, wherein α typically lies between 0 - 60° and preferably is around 45°. The opposite right wall is at an angle β with respect to the horizontal, β typically being a larger angle than α, for example 60° as shown. The different zones near the bottom of the reactor bottom area 19' are denoted by a, b and c. 'a' Indicates a "drag zone", wherein particles are dragged and accelerated towards zone 'b', which indicates a "maximum flow rate zone" where the flow rate is relatively high. From zone b the particles are dragged to zone 'c', which indicates a "diffuser zone" wherein flow rate and particle speed decrease again. Subsequently, the particles are forced upwards due to the suction created by the air bubbles 17 from the air injection device 10. Alternatively, the particles may enter the zone a of the reactor bottom area to the right of the reactor bottom area 19', where the cycle will repeat itself. The asymmetric embodiment of the reactor bottom area 19' of fig. 5 in practice achieves an optimal result with respect to preventing unwanted accumulation of particles on the reactor bottom 8 (thus preventing "dead areas").

Thus, optimally several of these reactor bottom areas 19' are positioned next to each other, with the upper part of the right wall as shown in fig. 5 connecting to the left wall of a further reactor bottom area (to the right). The several reactor bottom areas 19' then resemble a wave-like pattern when seen in cross-section, and cause a continuous flow to be present near/over the reactor bottom 8.

## Claims

1. Reactor vessel (1) for suspending media particles in a fluid, the reactor vessel having a center line (7) and comprising:
a reactor bottom (8),
a number of air injection devices each comprising a nozzle (11) having a nozzle axis extending transversely to the center line (7) wherein adjacent reactor bottom areas (19, 19') of the reactor bottom (8) extend in parallel fashion along the direction of the nozzle axis, each air injection device situated near the reactor bottom (8) in a vertical mid plane having a first side and an opposite a second side, the reactor bottom on each side of the vertical mid plane sloping downward to a lower point situated below the air injection device;
a draft tube (5) extending along the center line, substantially above the air injection devices, and the number of air injection devices extend in a direction transversely to the center line (7) at a horizontal distance from the draft tube (5),
**characterised in that** each air injection device is spaced at a predetermined distance (H1) from the lower point of the reactor bottom (8), and **in that** for each air injection device a fluid passage (16) is defined between a lower surface (14) of the injection device and the bottom (8), one or more air exit openings (13) of the injection device being provided in the nozzle (11) and situated at the second side of the mid plane for providing an upward air stream, wherein on the second side a larger open surface of air exit openings is present than on the first side, such that particles can travel downward at the first side of the mid plane and can move through the fluid passage (16) to the second side of the mid plane to be transported upward by the air stream.

2. Reactor vessel (1) according to claim 1, the air injection devices each comprising a tubular air inlet having an axis extending transversely to the center line (7).

3. Reactor vessel (1) according to claim 1 or 2, wherein a separator wall (18) extends upwards from the nozzle (11).

4. Reactor vessel (1) according to any of the preceding claims, wherein the reactor bottom (8) near each of the the air injection devices is of an inclined shape or of a curved shape having a rounded lower part.

5. Reactor vessel (1) according to claim 4, wherein the rounded lower part extends substantially along the nozzle axis, the rounded lower part being connected to side walls extending substantially along the nozzle axis, one side wall having an angle α with respect to a horizontal plane at that nozzle axis position, the angle α being smaller than an angle β of the opposite side wall at that nozzle axis position.

6. Reactor vessel (1) according to claim 5, wherein α is approximately 0 - 60° and preferably is around 45°.

7. Reactor vessel (1) according to any of the preceding claims, wherein
a diameter (D2) of the reactor vessel (1) is between 0.5 and 10 m,
a diameter (D1) of the draft tube (5) is between 0.1 and 5 m,
and wherein for each of the air injection devices:
- a distance of the air injection device from a lower end of the draft tube (5) is between 2.5 and 5 cm;and
- a distance (H1) of the air injection device from the lower point of the reactor bottom (8) is between 2-3 times a diameter (D3) of the nozzle (11).

8. Reactor vessel (1) according to any of the preceding claims, wherein the reactor bottom (8) comprises a plurality of adjacent reactor bottom (8) areas (19, 19') being of curved shape and having a rounded lower part.

9. Reactor vessel (1) according to claim 8, wherein each of the nozzles is a tubular nozzle (11).

## Patentansprüche

1. Reaktorkessel (1) zum Suspendieren von Medienpartikeln in einer Flüssigkeit, wobei der Reaktorkessel eine Mittellinie (7) hat und Folgendes umfasst:
einen Reaktorboden (8),
eine Anzahl von Luftinjektionsvorrichtungen, von denen jede eine Düse (11) mit einer Düsenachse umfasst, die sich quer zu der Mittellinie (7) erstreckt, wobei sich benachbarte Reaktorbodenbereiche (19, 19') des Reaktorbodens (8) auf parallele Weise entlang der Richtung der Düsenachse erstrecken, wobei jede Luftinjektionsvorrichtung, die sich in der Nähe des Reaktorbodens (8) in einer senkrechten Mittelebene befindet, eine erste Seite und eine gegenüberliegende zweite Seite hat, wobei der Reaktorboden auf jeder Seite der senkrechten Mittelebene nach unten zu einem niedrigeren Punkt unterhalb der Luftinjektionsvorrichtung abfällt;
ein Saugrohr (5), das sich entlang der Mittellinie im Wesentlichen oberhalb der Luftinjektionsvorrichtungen erstreckt, und die Anzahl von Luftinjektionsvorrichtungen erstrecken sich in einer Richtung quer zu der Mittellinie (7) in einer waagerechten Distanz von dem Saugrohr (5),
**gekennzeichnet dadurch, dass** jede Luftinjektionsvorrichtung in einer vorbestimmten Distanz (H1) von dem unteren Punkt des Reaktorbodens (8) beabstandet ist, und dadurch, dass für jede Luftinjektionsvorrichtung ein Fluiddurchgang (16) zwischen einer Unterfläche (14) der Injektionsvorrichtung und dem Boden (8) definiert ist, wobei ein oder mehrere Luftaustrittsöffnungen (13) der Injektionsvorrichtung in der Düse (11) vorgesehen sind und sich auf der zweiten Seite der Mittelebene zum Bereitstellen eines Luftstroms nach oben befinden, wobei auf der zweiten Seite eine größere offene Oberfläche von Luftaustrittsöffnungen als auf der ersten Seite vorhanden ist, so dass sich Partikel auf der ersten Seite der Mittelebene nach unten bewegen können und sich durch den Fluiddurchgang (16) zu der zweiten Seite der Mittelebene bewegen können, um durch den Luftstrom nach oben transportiert zu werden.

2. Reaktorkessel (1) nach Anspruch 1, wobei jede der Luftinjektionsvorrichtungen eine rohrförmige Lufteintrittsöffnung umfasst, die eine Achse hat, die sich quer zu der Mittellinie (7) erstreckt.

3. Reaktorkessel (1) nach Anspruch 1 oder 2, wobei sich eine Trennwand (18) von der Düse (11) nach oben erstreckt.

4. Reaktorkessel (1) nach einem der vorhergehenden Ansprüche, wobei der Reaktorboden (8) in der Nähe von jeder der Luftinjektionsvorrichtungen eine geneigte Form oder eine gebogene Form mit einem abgerundeten unteren Teil hat.

5. Reaktorkessel (1) nach Anspruch 4, wobei sich der abgerundete untere Teil im Wesentlichen entlang der Düsenachse erstreckt, wobei der abgerundete untere Teil mit Seitenwänden verbunden ist, die sich im Wesentlichen entlang der Düsenachse erstrecken, wobei eine Seitenwand einen Winkel α in Bezug auf eine waagerechte Ebene an dieser Düsenachsenposition hat, wobei der Winkel α kleiner als ein Winkel β der gegenüberliegenden Seitenwand an dieser Düsenachsenposition ist.

6. Reaktorkessel (1) nach Anspruch 5, wobei α ungefähr 0 - 60° ist und vorzugsweise etwa 45° ist.

7. Reaktorkessel (1) nach einem der vorherigen Ansprüche, wobei
ein Durchmesser (D2) des Reaktorkessels (1) zwischen 0,5 und 10 m liegt,
ein Durchmesser (D1) des Saugrohrs (5) zwischen 0,1 und 5 m liegt,
und wobei für jede der Luftinjektionsvorrichtungen:
- eine Distanz der Luftinjektionsvorrichtung von einem unteren Ende des Saugrohrs (5) zwischen 2,5 und 5 cm beträgt; und
- eine Distanz (H1) der Luftinjektionsvorrichtung von dem unteren Punkt des Reaktorbodens (8) zwischen dem 2-3-fachen eines Durchmessers (D3) der Düse (11) beträgt.

8. Reaktorkessel (1) nach einem der vorherigen Ansprüche, wobei der Reaktorboden (8) eine Vielzahl von benachbarten Reaktorboden (8)-Bereichen (19, 19') umfasst, die eine gebogene Form und einen abgerundeten unteren Teil haben.

9. Reaktorkessel (1) nach Anspruch 8, wobei jede der Düsen eine rohrförmige Düse (11) ist.

## Revendications

1. Cuve de réacteur (1) pour mettre en suspension des particules dans un fluide, la cuve de réacteur ayant une ligne centrale (7) et comprenant :
un fond de réacteur (8),
un nombre de dispositifs d'injection d'air comprenant chacun une buse (11) ayant un axe de buse s'étendant transversalement à la ligne centrale (7) où les zones de fond de réacteur adjacentes (19, 19') du fond de réacteur (8) s'étendent de manière parallèle le long de la direction de l'axe de buse, chaque dispositif d'injection d'air situé près du fond de réacteur (8) dans un plan médian vertical ayant un premier côté et un deuxième côté opposé, le fond de réacteur de chaque côté du plan médian vertical s'inclinant vers le bas vers un point inférieur situé sous le dispositif d'injection d'air ;
un tube de tirage (5) s'étendant le long de la ligne centrale, sensiblement au-dessus des dispositifs d'injection d'air, et le nombre de dispositifs d'injection d'air s'étendant dans une direction transversale à la ligne centrale (7) à une distance horizontale du tube de tirage (5),
**caractérisé en ce que** chaque dispositif d'injection d'air est espacé à une distance prédéterminée (H1) du point inférieur du fond de réacteur (8), et **en ce que** pour chaque dispositif d'injection d'air un passage de fluide (16) est défini entre une surface inférieure (14) du dispositif d'injection et du fond (8), une ou plusieurs ouvertures de sortie d'air (13) du dispositif d'injection étant fournies dans la buse (11) et situées au deuxième côté du plan médian pour fournir un flux d'air ascendant, où sur le deuxième côté, une plus grande surface ouverte d' ouvertures de sortie d'air est présente que sur le premier côté, de sorte que les particules peuvent se déplacer vers le bas du premier côté du plan médian et peuvent se déplacer à travers le passage de fluide (16) vers le deuxième côté du plan médian pour être transporté vers le haut par le flux d'air.

2. Cuve de réacteur (1) selon la revendication 1, les dispositifs d'injection d'air comprenant chacun une entrée d'air tubulaire ayant un axe s'étendant transversalement à la ligne centrale (7).

3. Cuve de réacteur (1) selon la revendication 1 ou 2, où une paroi de séparation (18) s'étend vers le haut depuis la buse (11).

4. Cuve de réacteur (1) selon l'une quelconque des revendications précédentes, où le fond de réacteur (8) à proximité de chacun des dispositifs d'injection d'air est de forme inclinée ou de forme courbée ayant une partie inférieure arrondie.

5. Cuve de réacteur (1) selon la revendication 4, où la partie inférieure arrondie s'étend sensiblement le long de l'axe de la buse, la partie inférieure arrondie reliée à des parois latérales s'étendant sensiblement le long de l'axe de la buse, une paroi latérale ayant un angle α par rapport à un plan horizontal à cette position d'axe d'orifice, l'angle α étant inférieur à un angle β de la paroi latérale opposée à cette position d'axe d'orifice.

6. Cuve de réacteur (1) selon la revendication 5, où α est approximativement de 0 à 60 ° et de préférence est d'environ 45 °.

7. Cuve de réacteur (1) selon l'une quelconque des revendications précédentes, où
un diamètre (D2) de la cuve de réacteur (1) est compris entre 0,5 et 10 m,
un diamètre (D1) du tube de tirage (5) est compris entre 0,1 et 5 m,
et où pour chacun des dispositifs d'injection d'air :
- une distance du dispositif d'injection d'air par rapport à une extrémité inférieure du tube de tirage (5) est comprise entre 2,5 et 5 cm ; et
- une distance (H1) du dispositif d'injection d'air par rapport au point inférieur du fond de réacteur (8) est entre 2-3 fois un diamètre (D3) de la buse (11).

8. Cuve de réacteur (1) selon l'une quelconque des revendications précédentes, où le fond de réacteur (8) comprend une pluralité de zones de fond de réacteur (8) adjacentes (19, 19') ayant une forme incurvée et ayant une partie inférieure arrondie.

9. Cuve de réacteur (1) selon la revendication 8, où chacune des buses est une buse tubulaire (11).
